(19) Europäisches Patentamt
European Patent Office
Office européen des brevets

(11) **EP 2 526 604 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(21) Anmeldenummer: **10703029.8**

(22) Anmeldetag: **19.01.2010**

(51) Int Cl.:
***H02J 3/18*** *(2006.01)*

(86) Internationale Anmeldenummer:
**PCT/EP2010/050562**

(87) Internationale Veröffentlichungsnummer:
**WO 2011/088885 (28.07.2011 Gazette 2011/30)**

(54) **VERFAHREN ZUM BETREIBEN EINES DREIPHASIGEN UMRICHTERS IN DREIECKSCHALTUNG UND SYMMETRIEREINRICHTUNG FÜR EINEN SOLCHEN UMRICHTER**

METHOD FOR OPERATING A THREE PHASE INVERTER IN DELTA-CONNECTION AND A BALANCING CONTROL DEVICE FOR SUCH AN INVERTER

MÉTHODE POUR FAIRE FONCTIONNER UN ONDULEUR TRIPHASÉ EN CONNEXION EN TRIANGLE ET UN DISPOSITIF D'ÉQUILIBRAGE POUR UN TEL ONDULEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**28.11.2012 Patentblatt 2012/48**

(73) Patentinhaber: **Siemens Aktiengesellschaft**
**80333 München (DE)**

(72) Erfinder: **PIESCHEL, Martin**
**90473 Nürnberg (DE)**

(56) Entgegenhaltungen:
**US-A1- 2009 102 436**

• **GENG WANG ET AL: "A novel control algorithm for cascade shunt active power filter" POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US LNKD- DOI: 10.1109/PESC.2004.1355846, 20. Juni 2004 (2004-06-20), Seiten 771-775VOL.1, XP010738083 ISBN: 978-0-7803-8399-9**
• **LEON M TOLBERT ET AL: "Charge Balance Control Schemes for Cascade Multilevel Converter in Hybrid Electric Vehicles" IEEE TRANSACTIONS ON INDUSTRIAL ELECTRONICS, IEEE SERVICE CENTER, PISCATAWAY, NJ, USA, Bd. 49, Nr. 5, 1. Oktober 2002 (2002-10-01), XP011073779 ISSN: 0278-0046**

**Beschreibung**

Aus dem Beitrag von Geng Wang et al., "A Novel Control Algorithm for Cascade Shunt Active Power Filter", Power Electronics Specialists Conference, 2004, IEEE 35th Annual, Aachen, Germany, 20.-25. Juni 2004, Seiten 771-775, Vol. 1 ist ein Aktivfilter bekannt, das in Parallelschaltung an eine Wechselspannungsleitung geschaltet ist. Das Aktivfilter weist drei zu einem gemeinsamen Sternpunkt miteinander verschaltete Phasenmodule auf, wobei jedes Phasenmodul eine Reihenschaltung von zweipoligen Submodulen umfasst, die jeweils mit einem Kondensator ausgerüstet sind. Zum Symmetrieren der in den Kondensatoren gespeicherten Energien wird für jedes Phasenmodul eine Summengleichspannung ermittelt und die ermittelte Summengleichspannung mit einem Sollwert verglichen.

In der US 2009/0102634 A1 ist ebenfalls ein Steuerungsverfahren für ein aktives Filter beschrieben, das Phasenmodule aufweist, die jedoch in einer Dreiecksschaltung miteinander verbunden sind. Die Phasenmodule weisen eine Reihenschaltung von zweipoligen H-Brücken auf.

In "IEEE TRANSACTIONS ON INDUSTRIAL ELECTRONICS", Vol. 49, No. 5, OCTOBER 2002, Seiten 1058 bis 1064, ist ein mehrstufiger Umrichter beschrieben, der in einer dreiphasigen Ausführung für ein dreiphasiges Wechselspannungsenergieversorgungsnetz in seinen drei Zweigen jeweils ein Phasenmodul aufweist; jedes Phasenmodul besteht aus derselben Anzahl von H-Brücken, die im Wesentlichen vier als H-Brücke geschaltete, schaltbare Leistungshalbleiter und einen parallel dazu liegenden Kondensator als Energiespeicher enthalten. Die jeweils ein Phasenmodul bildenden H-Brücken sind in Reihe mit einer Induktivität zwischen die Leiter des Wechselspannungsenergieversorgungsnetzes so geschaltet, dass sie jeweils einen Zweig des im Dreieck geschalteten Umrichters bilden.

Beim Betreiben des bekannten Umrichters sollen die Spannungen an den Kondensatoren konstant gehalten werden, weshalb die Summenspannung der Kondensatoren jedes Zweiges unabhängig voneinander auf einen vorgegebenen Wert geregelt wird. Dies bringt es mit sich, dass bei einer unsymmetrischen Belastung im Wechselspannungsenergieversorgungsnetz die Kondensatoren der verschiedenen Zweige unterschiedlich schnell geladen werden. Die drei getrennten Regelungen der Summenspannungen müssen daher sehr empfindlich ausgelegt, um ihrer Aufgabe gerecht zu werden.

Der Erfindung liegt die Aufgabe zugrunde, einen Umrichter der oben behandelten Art so zu betreiben, dass auch bei unsymmet-rischen Belastungen ein schneller Ausgleich der drei Summenspannungen eintritt.

Zur Lösung dieser Aufgabe dient ein Verfahren zum Betreiben eines an ein dreiphasiges Wechselspannungsenergieversorgungsnetz angeschlossenen dreiphasigen Umrichters in Dreieckschaltung, der in seinen drei Zweigen jeweils ein Phasenmodul mit jeweils derselben Anzahl von H-Brücken mit jeweils einem Kondensator enthält; bei dem Verfahren wird in jedem Zweig die Summe der Gleichspannungen an den Kondensatoren der H-Brücken unter Bildung jeweils einer Zweig-Summengleichspannung ermittelt und jede Zweig-Summengleichspannung mit einem Gleichspannungssollwert unter Bildung jeweils einer Spannungs-Regeldifferenzgröße für jeweils einen Regler verglichen; die Ausgangsgrößen des Reglers werden jeweils mit der zugehörigen, hinsichtlich der Amplitude normierten Wechselspannung am jeweiligen Zweig des Umrichters unter Bildung von abgeleiteten Wechselströmen multipliziert und die Wechselspannungen an den Zweigen des Umrichters und die abgeleiteten Wechselströme jeweils einer Clark-Transformation unter Bildung von zwei transformierten Spannungen und zwei transformierten Strömen mit einer Strom-Nullkomponente unterworfen; die transformierten Spannungen und Ströme werden einem Wirkleistungsfilter zugeführt, an dessen Ausgang abgeleitete transformierte Ströme erzeugt werden, die mit der Strom-Nullkomponente einer Clark-Rücktransformation zur Gewinnung von drei zweigbezogenen Stellströmen unterworfen werden; aus den zweigbezogenen Stellströmen werden schließlich mittels einer Steuereinrichtung Stellspannungen für die H-Brücken in den Zweigen des Umrichters gebildet.

Ein wesentlicher Vorteil des erfindungsgemäßen Verfahrens besteht darin, dass die Regelung der Summenspannungen relativ unempfindlich auf Änderungen reagieren muss, so dass keine Rückwirkungen auf das Wechselspannungsenergieversorgungsnetz verursacht werden; der Betrieb des Umrichters ist daher nicht eingeschränkt.

Als besonders vorteilhaft wird es angesehen, wenn die Strom-Nullkomponente verstärkt wird, weil dadurch der Ladungsausgleich zwischen den Kondensatoren in den verschiedenen Zweigen des Umrichters vergleichsweise schnell stattfindet.

Die zweigbezogenen Stellströme können bei dem erfindungsgemäßen Verfahren in unterschiedlicher Weise weiterverarbeitet werden. Als vorteilhaft erscheint es zur Minimierung des Aufwandes, wenn die in den Umrichter fließenden Wechselströme sowie die zweigbezogenen Stellströme jeweils einer Clark-Transformation zur Bildung einerseits von transformierten Istströmen mit Iststrom-Nullkomponenten und andererseits von transformierten Stellströmen mit Stellstrom-Nullkomponenten zur Bildung von Strom-Sollgrößen unterworfen werden und daraus jeweils eine Strom-Regeldifferenzgröße für jeweils einen Stromregler gebildet wird und mit den Ausgangsgrößen der Stromregler und mit den transformierten Spannungen Differenzgrößen gebildet werden; aus den Differenzgrößen und der sollstromnullkomponentebezogenen Ausgangsgröße des entsprechenden Reglers werden schließlich durch Clark-Rücktransformation die Stellspannungen für die H-Brücken in den Zweigen des Umrichters gebildet.

Der Erfindung liegt ferner die Aufgabe zugrunde, eine Symmetriereinrichtung für einen dreiphasigen Umrichter in Dreieckschaltung vorzuschlagen, mit der sich auch bei unsymmetrischen Belastungen ein schneller Ausgleich der drei Summenspannungen in einem dreiphasigen Umrichter erreichen lässt.

Diese Aufgabe wird erfindungsgemäß gelöst durch eine Symmetriereinrichtung für einen Umrichter in Dreieckschaltung, der in den drei Zweigen der Dreieckschaltung jeweils ein Phasenmodul mit jeweils derselben Anzahl von H-Brücken mit jeweils einem Kondensator aufweist und versehen ist mit jeweils einem Summenbildner für jeden Zweig des Umrichters in dem aus den gemessenen Gleichspannungen an den Kondensatoren der H-Brücken jeweils eine Zweig-Summengleichspannung gebildet wird; die Symmetriereinrichtung ist ferner ausgestattet mit jeweils einem Differenzbildner, in dem jede Zweig-Summengleichspannung mit einem Gleichspannungssollwert unter Bildung jeweils einer Spannungs-Regeldifferenzgröße für jeweils einen nachgeordneten Regler verglichen wird; außerdem ist ein Multiplizierer vorhanden, in dem die Ausgangsgrößen des Reglers jeweils mit der zugehörigen, hinsichtlich der Amplitude normierten Wechselspannung am jeweiligen Zweig des Umrichters unter Bildung von abgeleiteten Wechselströmen multipliziert werden, und ein Clark-Spannungentransformationsbaustein für die Wechselspannungen an den Zweigen des Umrichters und ein weiterer Clark-Strömetransformationsbaustein für die abgeleiteten Wechselströme zur Bildung von zwei transformierten Spannungen und zwei transformierten Strömen einschließlich einer Strom-Nullkomponente; außerdem ist ein mit den transformierten Spannungen und Strömen beaufschlagter Wirkleistungsfilter zur Erzeugung abgeleiteter transformierter Ströme und ein mit den abgeleiteten transformierten Strömen einschließlich der Strom-Nullkomponente beaufschlagter Clark-Rücktransformationsbaustein zur Gewinnung von drei zweigbezogenen Stellströmen vorhanden sowie eine nachgeordnete Steuereinrichtung, in der aus den zweigbezogenen Stellströmen Stellspannungen für die H-Brücken in den Zweigen des Umrichters gebildet werden.

Vorteilhaft ist die erfindungsgemäße Symmetriereinrichtung vor allem insofern, als mit ihr im Zusammenwirken mit dem Umrichter die Regelung der Summenspannungen relativ unempfindlich auf Änderungen reagieren kann, so dass keine Rückwirkungen auf das Wechselspannungsenergieversorgungsnetz verursacht werden; der Betrieb des Umrichters ist daher nicht eingeschränkt.

Bei einer besonders vorteilhaften Ausgestaltung der erfindungsgemäßen Symmetriereinrichtung ist dem weiteren Clark-Transformationsbaustein ein Verstärker für die Strom-Nullkomponente nachgeschaltet, wodurch der Ladungsausgleich zwischen den Kondensatoren in den verschiedenen Zweigen des Umrichters vergleichsweise schnell stattfindet.

Um die Steuereinrichtung der erfindungsgemäßen Symmetriereinrichtung vergleichsweise einfach ausführen zu können, weist sie eingangsseitig einen Clark-Istströmetransformationsbaustein auf, in dem aus den in den Symmetrierumrichter fließenden Wechselströmen transformierte Istströme mit Iststrom-Nullkomponente gebildet werden, sowie einen Clark-Stellströmetransformationsbaustein, in dem aus den Stellströmen transformierte Stellströme mit Stellstrom-Nullkomponenten gebildet werden; dem Clark-Istströmetransformatorbaustein und dem Clark-Stellströmetransformationsbaustein sind Differenzbildner nachgeordnet, in denen jeweils eine Strom-Regeldifferenzgröße für jeweils einen den Differenzbildnern nachgeschalteten Stromregler gebildet wird; ferner ist den Stromreglern jeweils ein weiterer, auch mit dem Clark-Spannungenstransformationsbaustein verbundener Differenzbildner nachgeordnet, in denen aus den Ausgangsgrößen der Stromregler und den transformierten Spannungen Differenzgrößen gebildet werden, und am Ausgang der Steuereinrichtung ist ein weiterer Clark-Rücktransformationsbaustein vorhanden, der aus den Differenzgrößen und der sollstromnullkomponentebezogenen Ausgangsgröße des entsprechenden Stromreglers die Stellspannungen für die H-Brücken in den Zweigen des Umrichters bildet. Andere Ausgestaltungen bzw. Ergänzungen der Steuereinrichtung kommen ebenfalls in Frage.

Zur weiteren Erläuterung der Erfindung ist in

Fig. 1  ein Ausführungsbeispiel der erfindungsgemäßen Symmetriereinrichtung für einen Umrichter in schematischer Weise mit seinen wesentlichen Komponenten und in

Fig. 2  ein Ausführungsbeispiel einer für die erfindungsgemäße Symmetriereinrichtung besonders geeigneten Steuereinrichtung

dargestellt.

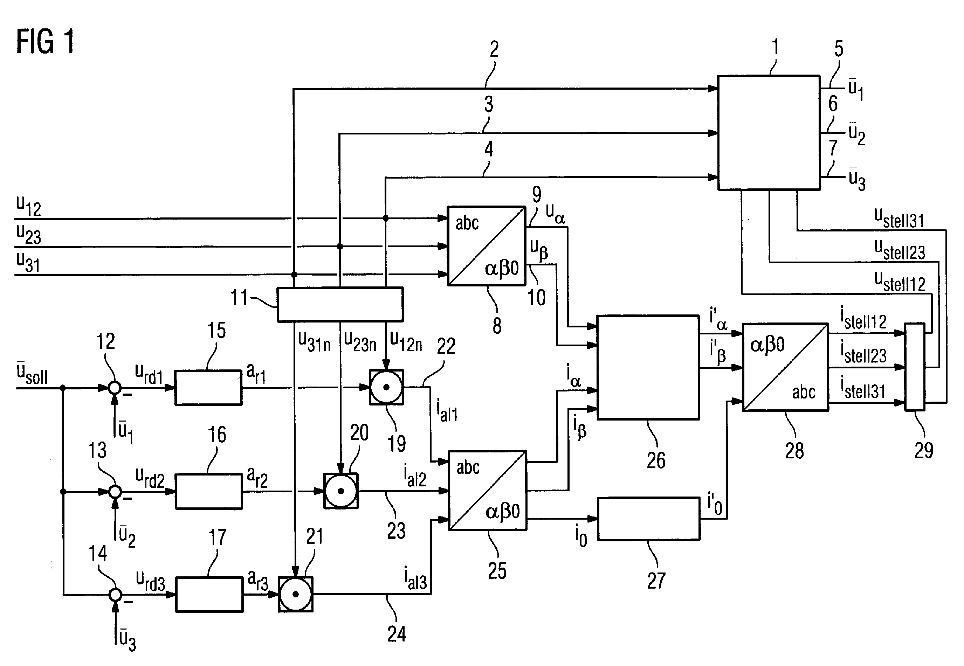

Die Figur 1 zeigt schematisch einen dreiphasigen Umrichter 1 wie er beispielsweise in seinem näheren Aufbau in der oben behandelten Veröffentlichung beschrieben ist. Der Umrichter 1 ist wechselstromseitig über Leitungen 2, 3 und 4 mit einem nicht gezeigten Versorgungsnetz verbunden. An den Leitungen 2, 3 und 4 stehen demzufolge die Dreieckspannungen $u_{12}$, $u_{23}$ und $u_{31}$ an. An Leitungen 5, 6 und 7 des Umrichters 1 treten Spannungen $\bar{u}_1$, $\bar{u}_2$ und $\bar{u}_3$ auf, die jeweils eine Zweig-Summengleichspannung darstellen. Jede dieser Zweig-Summengleichspannungen ist in einer in der Figur 1 nicht dargestellten, aber an sich bekannter Weise aus der Summe der gemessenen Gleichspannungen an den Kondensatoren der H-Brücken der einzelnen Zweige der Dreieckschaltung des Umrichters 1 gebildet.

Die Wechselspannungen $u_{12}$, $u_{23}$ und $u_{31}$ werden außerdem einem Clark-Transformationsbaustein 8 zugeführt, indem diese Wechselspannungen einer Clark-Transformation unterworfen werden, so dass an Ausgängen 9, 10 des Clark-Transformationsbausteins 8 die transformierten Spannungen $u_\alpha$ und $u_\beta$ entstehen. Darüber hinaus werden die Wechselspannungen $u_{12}$, $u_{23}$ und $u_{31}$ auch einem Normierungsbaustein 11 zugeführt, in dem die Wechselspannungen hinsichtlich ihrer Amplitude normiert werden. Am Ausgang des Normierungsbausteins 11 entstehen somit die Spannungen $u_{12n}$, $u_{23n}$ und $u_{31n}$.

Wie die Figur 1 ferner zeigt, werden die Zweig-Summengleichspannungen $\overline{u_1}$ bis $\overline{u_3}$ jeweils einer Differenzbildungseinrichtung 12, 13 und 14 zugeführt, an denen jeweils auch ein Gleichspannungssollwert $\overline{u_{soll}}$ ansteht. Mittels der Differenzbildungseinrichtungen 12 bis 14 werden jeweils Spannungs-Regeldifferenzgrößen $u_{rd1}$, $u_{rd2}$ und $u_{rd3}$ erzeugt. Mit diesen Spannungs-Regeldifferenzgrößen wird jeweils ein Regler 15, 16 bzw. 17 - bevorzugt als PI-Regler ausgeführt - beaufschlagt, dessen Ausgangsgrößen $a_{r1}$, $a_{r2}$ und $a_{r3}$ jeweils einem Multiplizierer 19, 20 und 21 zugeführt werden. Die drei Regler 15 bis 17 berechnen die Ströme zwischen den Zweigen des Umrichters 1, die erforderlich sind, um die Zweig-Summengleichspannungen auf den geforderten Wert zu bringen. Die Multiplizierer 19 bis 21 liegen außerdem an den in ihrer Amplitude normierten Wechselspannungen $u_{12n}$, $u_{23n}$ und $u_{31n}$, so dass an ihren Ausgängen 22, 23 und 24 abgeleitete Wechselströme $ia_{11}$, $i_{a12}$ und $i_{a13}$ entstehen. Mit diesen abgeleiteten Wechselströmen ist ein weiterer Clark-Transformationsbaustein 25 beaufschlagt, in dem aus den abgeleiteten Wechselströmen $i_{a11}$, $i_{a12}$ und $i_{a23}$ transformierte Ströme $i_\alpha$ und $i_\beta$ sowie eine Null-Stromkomponente $i_0$ gebildet werden.

Dem Clark-Transformationsbaustein 8 und dem weiteren Clark-Transformationsbaustein 25 ist ein Wirkleistungsfilter 26 nachgeordnet, das somit eingangsseitig an den transformierten Spannungen $u_\alpha$ und $u_\beta$ liegt sowie mit den transformierten Strömen $i_\alpha$ und $i_\beta$ beaufschlagt ist. Am Ausgang des Wirkleistungsfilters 26 entstehen dann weitere transformierte Ströme $i_\alpha'$ und $i_\beta'$, die nur zur Wirkleistungsaufnahme des Umrichters dienen. Der Blindleistungsanteil, welcher nicht zum Laden des Umrichters 1 dient, ist somit entfernt, wodurch der Stellbereich des Umrichters 1 besser genutzt wird. Dabei werden zur Berechnung der weiteren transformierten Ströme $i_\alpha'$ und $i_\beta'$ folgende Berechnungen durchgeführt:

$$i_\alpha' = \frac{u_\alpha^2 i_\alpha + u_\alpha u_\beta i_\beta}{u_\alpha^2 + u_\beta^2}$$

$$i_\beta' = \frac{u_\beta^2 i_\beta + u_\alpha u_\beta i_\alpha}{u_\alpha^2 + u_\beta^2}$$

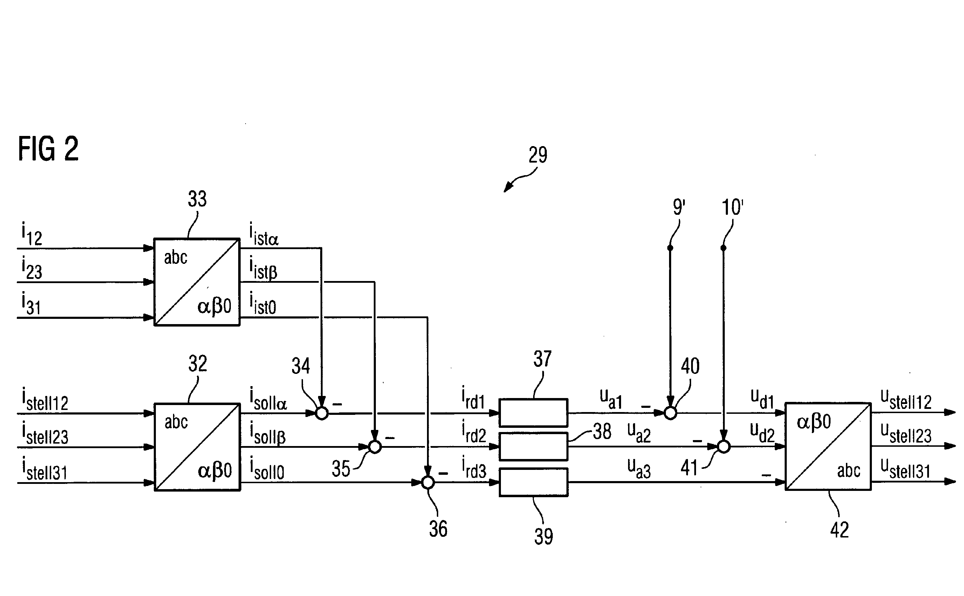

Die Strom-Nullkomponente $i_0$ wird mittels eines Verstärkers 27 verstärkt, der an seinem Ausgang eine verstärkte Strom-Nullkomponente $i_0'$ erzeugt. Durch die verstärkte Strom-Nullkomponente ist ein schnellerer Ladungsausgleich ermöglicht. Diese verstärkte Strom-Nullkomponente wird zusammen mit den weiteren transformierten Strömen $i_\alpha'$ und $i_\beta'$ einem Clark-Rücktransformationsbaustein 28 zugeführt, in dem aus den ihm zugeführten transformierten Größen zweigbezogene Stellströme $i_{stell12}$, $i_{stell23}$ und $i_{stell31}$ gebildet werden. Diese zweigbezogenen Stellströme werden in einer Steuereinrichtung 29 weiterverarbeitet, die in einer im Zusammenhang mit der Beschreibung der Figur 2 näher erläuterten Weise Stellspannungen $u_{stell12}$, $u_{stell23}$ und $u_{stell31}$ erzeugt, die in bekannter Weise zur Veränderung der Spannung an den Kondensatoren der H-Brücken in der Zweigen des Umrichters 1 verwendet werden. Die in Figur 2 dargestellte Steuereinrichtung ist einerseits mit ihren Eingängen an die Ausgänge 9 und 10 des Clark-Transformationsbausteins 8 (vgl. Figur 1) angeschlossen und andererseits mit den zweigbezogenen Stellströmen $i_{stell12}$, $i_{stell23}$ und $i_{stell31}$ beaufschlagt, indem diese zweigbezogenen Stellströme einem Clark-Stellströmetransformationsbaustein 32 zugeführt werden. Außerdem werden einem Clark-Istströmetransformatorbaustein 33 Wechselströme $i_{12}$, $i_{23}$ und $i_{31}$ zugeführt, die dem Umrichter 1 zufließenden Wechselströmen entsprechen.

In dem Clark-Stellströmetransformationsbaustein 32 werden aus den zweigbezogenen Stellströmen $i_{stell12}$, $i_{stell23}$ und $i_{stell31}$ transformierte Istströme und eine Iststrom-Nullkomponente gebildet, die für die nachfolgende Regelung Sollwerte darstellt und daher in der Figur 2 mit $i_{soll\alpha}$, $i_{soll\beta}$ und $i_{soll0}$ bezeichnet werden. Diese Ströme werden in Differenzbildnern 34, 35 und 36 mit den transformierten Istströmen $i_{ist\alpha}$, $i_{ist\beta}$ und $i_{ist0}$ verglichen, so dass am Ausgang dieser Differenzbildner jeweils Strom-Regeldifferenzgrößen $i_{rd1}$, $i_{rd2}$ und $i_{rd3}$ entstehen. Mit diesen Strom-Regeldifferenzgrößen sind als PI-Regler ausgeführte Stromregler 37, 38 und 39 beaufschlagt, deren spannungsbezogene Stellgrößen $u_{a1}$, $u_{a2}$ und $u_{a3}$ weiteren Differenzbildnern 40 und 41 zugeführt werden. An diesen weiteren Differenzbildnern 40 und 41 liegen auch die transformierten Spannungen $u_\alpha$ und $u_\beta$. Ausgangsseitig entstehen die Differenzgrößen $u_{d1}$ und $u_{d2}$, die einem weiteren Clark-Spannungenrücktransformationsbaustein 42 zugeführt werden. Die Ausgangsgröße $u_{a3}$ des Stromreglers 39 wird direkt dem weiteren Clark-Spannungenrücktransformationsbaustein 42 zugeführt. Am Ausgang des weiteren Clark-Spannungenrücktransformationsbausteins 42 ergeben sich dann die Stellspannung $u_{stell12}$, $u_{stell23}$ und $u_{stell31}$, die - wie bereits im Zusammenhang mit der Beschreibung der Figur 1 erwähnt - zur Einstellung der Spannungen an den Kondensatoren der Phasenmodule der einzelnen Zweige des Umrichters 1 verwendet werden unter Erzielung einer Symmetrierung. Dabei kann die Umsetzung der Stellspannungen $u_{stell12}$, $u_{stell23}$ und $u_{stell31}$ in Schaltbefehle für die einzelnen H-Brücken des Umrichters 1 durch das bekannte Verfahren Phase-Shifted-PWM erfolgen.

Bei dem erfindungsgemäßen Verfahren erfolgt also der Ladungsausgleich im Umrichter 1 allein über die Strom-Nullkomponente $i_{soll0}$ des Stromsollwertes; dieser Strom fließt nur zwischen den Zweigen des Umrichters 1 und wirkt nicht auf das Wechselspannungsenergieversorgungsnetz zurück.

**Patentansprüche**

1. Verfahren zum Betreiben eines an ein dreiphasiges Wechselspannungsenergieversorgungsnetz angeschlossenen dreiphasigen Umrichters (1) in Dreieckschaltung, der in seinen drei Zweigen jeweils ein Phasenmodul mit jeweils derselben Anzahl von H-Brücken mit jeweils einem Kondensator enthält, bei dem

   • in jedem Zweig die Summe der gemessenen Gleichspannungen an den Kondensatoren der H-Brücken unter Bildung jeweils einer Zweig-Summengleichspannung $(\bar{u}_1, \bar{u}_2, \bar{u}_3)$ ermittelt wird,
   • jede Zweig-Summengleichspannung $(\bar{u}_1, \bar{u}_2, \bar{u}_3)$ mit einem Gleichspannungssollwert $(\bar{u}_{soll})$ unter Bildung jeweils einer Spannungs-Regeldifferenzgröße $(u_{rd1}, u_{rd2}, u_{rd3})$ für jeweils einen Regler (15, 16, 17) verglichen wird, **dadurch gekennzeichnet dass**
   • die Ausgangsgrößen $(a_{r1}, a_{r2}, a_{r3})$ des Reglers (15, 16, 17) jeweils mit der zugehörigen, hinsichtlich der Amplitude normierten Wechselspannung $(u_{12n}, u_{23n}, u_{31n})$ am jeweiligen Zweig des Umrichters (1) unter Bildung von abgeleiteten Wechselströmen $(i_{a11}, i_{a12}, i_{a13})$ multipliziert werden,
   • die Wechselspannungen $(u_{12}, u_{23}, u_{31})$ an den Zweigen des Umrichters (1) und die abgeleiteten Wechselströme $(i_{a11}, i_{a12}, i_{a13})$ jeweils einer Clark-Transformation unter Bildung von zwei transformierten Spannungen $(u_\alpha, u_\beta)$ und zwei transformierten Strömen $(i_\alpha, i_\beta)$ mit einer Strom-Nullkomponente $(i_0)$ unterworfen werden,
   • die transformierten Spannungen $(u_\alpha, u_\beta)$ und Ströme $(i_\alpha, i_\beta)$ einem Wirkleistungsfilter (26) zugeführt werden, an dessen Ausgang abgeleitete transformierte Ströme $(i_\alpha{'}, i_\beta{'})$ erzeugt werden,
   • die abgeleiteten transformierten Ströme $(i_\alpha{'}, i_\beta{'})$ und die Strom-Nullkomponente $(i_0{'})$ einer Clark-Rücktransformation zur Gewinnung von drei zweigbezogenen Stellströmen $(i_{stell12}, i_{stell23}, i_{stell31})$ unterworfen werden und
   • aus den zweigbezogenen Stellströmen $(i_{stell12}, i_{stell23}, i_{stell23})$ mittels einer Steuereinrichtung (29) Stellspan- J nungen $(u_{stell12}, u_{stell23}, u_{stell31})$ für die H-Brücken in den Zweigen des Umrichters (1) gebildet werden.

2. Verfahren nach Anspruch 1, **dadurch gekennzeichnet, dass**

   • die Strom-Nullkomponente $(i_0)$ verstärkt wird.

3. Verfahren nach Anspruch 1 oder 2, **dadurch gekennzeichnet, dass**

   • die in den Umrichter (1) fließenden Wechselströme $(i_{12}, i_{23}, i_{31})$ sowie die zweigbezogenen Stellströme $(i_{stell2}, i_{stel23}, i_{stel31})$ jeweils einer Clark-Transformation zur Bildung einerseits von transformierten Istströmen mit Iststrom-Nullkomponenten $(i_{ist\alpha}, i_{st\beta}, i_{ist0})$ und andererseits von transformierten Stellströmen mit Stellstrom-Nullkomponenten zur Bildung von Strom-Sollgrößen $(i_{soll\alpha}, i_{soll\beta}, i_{soll0})$ unterworfen werden und daraus jeweils eine Strom-Regeldifferenzgröße $(i_{rd1}, i_{rd2}, i_{rd3})$ für jeweils einen Stromregler (27, 38, 39) gebildet wird,
   • mit den Ausgangsgrößen $(u_{a1}, u_{a2}, u_{a3})$ der Stromregler (37, 38, 39) und mit den transformierten Spannungen $(u_\alpha, u_\beta)$ Differenzgrößen $(u_{d1}, i_{d2})$ gebildet werden und
   • aus den Differenzgrößen $(u_{d1}, i_{d2})$ und der sollstromnullkomponentebezogenen Ausgangsgröße $(u_{a3})$ des entsprechenden Stromreglers (39) durch Clark-Rücktransformation die Stellspannungen $(u_{soll12}, u_{soll23}, u_{soll31})$ bezogenen Ausgangsgröße $(u_{a3})$ für die H-Brücken in den Zweigen des Umrichters (1) gebildet werden.

4. Symmetriereinrichtung für einen Umrichter (1) in Dreieckschaltung, der in den drei Zweigen der Dreieckschaltung jeweils ein Phasenmodul mit jeweils derselben Anzahl von H-Brücken mit jeweils einem Kondensator aufweist und versehen ist mit jeweils einem Summenbildner für jeden Zweig des Umrichters (1), in dem aus den gemessenen Gleichspannungen an den Kondensatoren der H-Brücken jeweils eine Zweig-Summengleichspannung $(\bar{u}_1, \bar{u}_2, \bar{u}_3)$ gebildet wird, wobei die Symmetriereinrichtung ausgestattet ist mit

   • jeweils einer Differenzbildungseinrichtung (12, 13, 14), in der jede Zweig-Summengleichspannung $(\bar{u}_1, \bar{u}_2, \bar{u}_3)$ mit einem Gleichspannungssollwert $(u_{soll})$ unter Bildung jeweils einer Spannungs-Regeldifferenzgröße $(u_{rd1}, u_{rd2}, u_{rd3})$ für jeweils einen nachgeordneten Regler (15, 16, 17) verglichen wird,
   • jeweils einem Multiplizierer (19, 20, 21), in dem die Ausgangsgrößen $(a_{r1}, a_{r2}, a_{r3})$ des Reglers (15, 16, 17) jeweils mit der zugehörigen, hinsichtlich der Amplitude normierten Wechsel-

spannung ($u_{12n}$, $u_{23n}$, $u_{31n}$) am jeweiligen Zweig des Umrichters (1) unter Bildung von abgeleiteten Wechselströmen ($i_{al1}$, $i_{al2}$, $i_{a13}$) multipliziert werden,

• einem Clark-Spannungentransformationsbaustein (8) für die Wechselspannungen ($u_{12}$, $u_{23}$, $u_{31}$) an den Zweigen des Umrichters (1) und einem weiteren Clark- Strömetransformationsbaustein (25) für die abgeleiteten Wechselströme ($i_{al1}$, $i_{al2}$, $i_{al3}$) zur Bildung von zwei transformierten Spannungen ($u_\alpha$, $u_\beta$) und zwei transformierten Strömen ($i_\alpha$, $i_\beta$) mit einer Strom- Nullkomponente ($i_0$),

• einem mit den transformierten Spannungen ($u_\alpha$, $u_\beta$) und Strömen ($i_\alpha$, $i_\beta$) beaufschlagten Wirkleistungsfilter (26) zur Erzeugung weiterer transformierter Ströme ($i_{\alpha'}$, $i_{\beta'}$),

• einem mit den weiteren transformierten Strömen ($i_{\alpha'}$, $i_{\beta'}$) einschließlich der Strom-Nullkomponente ($i_{0'}$) beaufschlagten Clark-Rücktransformationsbaustein (28) zur Gewinnung von drei zweigbezogenen Stellströmen ($i_{stell12}$, $i_{stell23}$, $i_{stell31}$) und

• einer nachgeordneten Steuereinrichtung (29), in der aus den zweigbezogenen Stellströmen ($i_{stell12}$, $i_{stell23}$, $i_{stell31}$) Stellspannungen für die H-Brücken ($u_{soll12}$, $u_{soll23}$, $u_{soll31}$) in den Zweigen des Umrichters (1) gebildet werden.

5. Symmetriereinrichtung nach Anspruch 4, **dadurch gekennzeichnet, dass**

• dem weiteren Clark-Transformationsbaustein (28) ein Verstärker (27) für die Strom-Nullkomponente ($i_0$) nachgeschaltet ist.

6. Symmetriereinrichtung nach Anspruch 4 oder 5, **dadurch gekennzeichnet, dass**

• die Steuereinrichtung (29) eingangsseitig einen Clark-Istströmetransformatorbaustein (33) aufweist, in dem aus den in den Umrichter (1) fließenden Wechselströmen ($i_{12}$, $i_{23}$, $i_{31}$) transformierte Istströme ($i_{stell\alpha}$, $i_{stell\beta,}$) mit Iststrom-Nullkomponente ($i_{ist0}$) gebildet werden, sowie einen Clark-Stellströmetransformationsbaustein (32) enthält, in dem aus den Stellströmen ($i_{stell12}$, $i_{stell23}$, $i_{stell31}$) transformierte Stellströme mit Stellstrom-Nullkomponenten als Strom-Stellgrößen ($i_{soll\alpha}$, $i_{soll\beta}$, $i_{soll0}$) gebildet werden,

• dem Clark-Istströmetransformatorbaustein (33) und dem Clark-Stellströmetransformationsbaustein (32) Differenzbildner (34, 35, 36) nachgeordnet sind, in denen jeweils eine Strom-Regeldifferenzgröße ($i_{rd1}$, $i_{rd2}$, $i_{rd3}$) für jeweils einen den Differenzbildnern (34, 35, 36) nachgeschalteten Stromregler (37, 38, 39) gebildet wird,

• den Stromreglern (37, 38, 39) jeweils ein weiterer, auch mit dem Clark-Spannungsstransformationsbaustein (8) verbundener Differenzbildner (40, 41) nachgeordnet ist, in denen aus den Ausgangsgrößen ($u_{a1}$, $u_{a2}$) der Stromregler (37, 38) und den transformierten Spannungen ($u_\alpha$, $u_\beta$) Differenzgrößen ($u_{d1}$, $u_{d2}$) gebildet werden, und

• am Ausgang der Steuereinrichtung (29) ein weiterer Clark-Rücktransformationsbaustein (42) vorhanden ist, der aus den Differenzgrößen ($u_{d1}$, $u_{d2}$) und der stromnullkomponentebezogenen Ausgangsgröße ($u_{a3}$) des entsprechenden Stromreglers (39) die Stellspannungen ($u_{stell2}$, $u_{stel23}$, $u_{stel31}$) für die H-Brücken in den Zweigen des Umrichters (1) bildet.

## Claims

1. Method for operating a delta-connected three-phase converter (1) that is connected to a three-phase AC voltage power supply system and the three branches of which each contain a phase module having the same respective number of H-bridges having a respective capacitor, in which

• in each branch the sum of the measured DC voltages on the capacitors of the H-bridges is ascertained to form a respective branch summed DC voltage ($\bar{u}_1, \bar{u}_2, \bar{u}_3$),

• each branch summed DC voltage ($\bar{u}_1, \bar{u}_2, \bar{u}_3$) is compared with a DC voltage setpoint value ($\bar{u}_{setpoint}$) to form a respective voltage control difference variable ($u_{rd1}$, $u_{rd2}$, $U_{rd3}$) for a respective controller (15, 16, 17),

**characterized in that**

• the output variables ($a_{r1}$, $a_{r2}$, $a_{r3}$) from the controller (15, 16, 17) are each multiplied by the associated AC voltage ($u_{12n}$, $u_{23n}$, $u_{31n}$), which has been normalized in respect of amplitude, on the respective branch of the converter (1) to form derived alternating currents ($i_{a11}$, $i_{a12}$, $i_{a13}$),

• the AC voltages ($u_{12n}$, $u_{23n}$, $u_{31n}$) on the branches of the converter (1) and the derived alternating currents ($i_{a11}$, $i_{a12}$, $i_{a13}$) are each subjected to Clarke transformation to form two transformed voltages ($u_\alpha$, $u_\beta$) and two transformed currents ($i_\alpha$, $i_\beta$) having a current zero component ($i_0$),

• the transformed voltages ($u_\alpha$, $u_\beta$) and currents ($i_\alpha$, $i_\beta$) are supplied to an active power filter (26), the output of which produces derived transformed currents ($i_\alpha^{'}$, $i_\beta^{'}$),

• the derived transformed currents ($i_\alpha^{'}$, $i_\beta^{'}$) and the current zero component ($i_0^{'}$) are subjected to Clarke back-transformation to obtain three branch-related control currents ($i_{control12}$, $i_{control23}$, $i_{control31}$), and

• a control device (29) is used to form control voltages ($u_{control12}$, $u_{control23}$, $u_{control31}$) for the H-bridges in the branches of the converter (1) from the branch-related control currents ($i_{control12}$, $i_{control23}$, $i_{control31}$).

2. Method according to Claim 1, **characterized in that**

• the current zero component ($i_0$) is amplified.

3. Method according to Claim 1 or 2, **characterized in that**

• the alternating currents ($i_{12}$, $i_{23}$, $i_{31}$) flowing into the converter (1) and also the branch-related control currents ($i_{control12}$, $i_{control23}$, $i_{control31}$) are each subjected to Clarke transformation for forming firstly transformed actual currents having actual current zero components ($i_{actual\alpha}$, $i_{actual\beta}$, $i_{actual0}$) and secondly transformed control currents having control zero components for forming control setpoint variables ($i_{setpoint\alpha}$, $i_{setpoint\beta}$, $i_{setpoint0}$), and a respective current control difference variable ($i_{rd1}$, $i_{rd2}$, $i_{rd3}$) for a respective current controller (27, 38, 39) is formed therefrom,

• the output variables ($u_{a1}$, $u_{a2}$, $u_{a3}$) from the current controllers (37, 38, 39) and the transformed voltages ($u_{\alpha}$, $u_{\beta}$) are used to form difference variables ($u_{d1}$, $i_{d2}$), and

• Clarke back-transformation is used to form the control voltages ($u_{setpoint12}$, $u_{setpoint23}$, $u_{setpoint31}$) for the H-bridges in the branches of the converter (1) from the difference variables ($u_{d1}$, $i_{d2}$) and the setpoint-current-zero-component-related output variable ($u_{a3}$) from the relevant current controller (39).

4. Balancing device for a delta-connected converter (1), the three branches of the delta connection of which each have a phase module having the same respective number of H-bridges having a respective capacitor and which is provided with a respective summator for each branch of the converter (1), in which a respective branch summed DC voltage ($\bar{u}_1, \bar{u}_2, \bar{u}_3$) is formed from the measured DC voltages on the capacitors of the H-bridges, wherein the balancing device is equipped with

• a respective difference formation device (12, 13, 14), in which each branch summed DC voltage ($\bar{u}_1, \bar{u}_2, \bar{u}_3$) is compared with a DC voltage setpoint value ($u_{setpoint}$) to form a respective voltage control difference variable ($u_{rd1}$, $u_{rd2}$, $u_{rd3}$) for a respective subordinate controller (15, 16, 17),

• a respective multiplier (19, 20, 21), in which the output variables ($a_{r1}$, $a_{r2}$, $a_{r3}$) from the controller (15, 16, 17) are each multiplied by the associated AC voltage ($u_{12n}$, $u_{23n}$, $u_{31n}$), which has been normalized in respect of amplitude, on the respective branch of the converter (1) to form derived alternating currents ($i_{a11}$, $i_{a12}$, $i_{a13}$),

• a Clarke voltage transformation chip (8) for the AC voltages ($u_{12}$, $u_{23}$, $u_{31}$) on the branches of the converter (1) and a further Clarke current transformation chip (25) for the derived alternating currents ($i_{a11}$, $i_{a12}$, $i_{a13}$) for forming two transformed voltages ($u_{\alpha}$, $u_{\beta}$) and two transformed currents ($i_{\alpha}$, $i_{\beta}$) having a current zero component ($i_0$),

• an active power filter (26), to which the transformed voltages ($u_{\alpha}$, $u_{\beta}$) and currents ($i_{\alpha}$, $i_{\beta}$) are applied, for producing further transformed currents ($i_{\alpha}'$, $i_{\beta}'$),

• a Clarke back-transformation chip (28), to which the further transformed currents ($i_{\alpha}'$, $i_{\beta}'$), including the current zero component ($i_0'$), are applied, for obtaining three branch-related control currents ($i_{control12}$, $i_{control23}$, $i_{control31}$), and

• a subordinate control device (29), in which control voltages for the H-bridges ($u_{setpoint12}$, $u_{setpoint23}$, $u_{setpoint31}$) in the branches of the converter (1) are formed from the branch-related control currents ($i_{control12}$, $i_{control23}$, $i_{control31}$).

5. Balancing device according to Claim 4, **characterized in that**

• the further Clarke transformation chip (25) has an amplifier (27) for the current zero component ($i_0$) connected downstream of it.

6. Balancing device according to Claim 4 or 5, **characterized in that**

• the control device (29) has, on the input side, a Clarke actual current transformer chip (33), in which transformed actual currents ($i_{control\alpha}$, $i_{control\beta}$) having an actual current zero component ($i_{actual0}$) are formed from the alternating currents ($i_{12}$, $i_{23}$, $i_{31}$) flowing into the converter (1), and also contains a Clarke control current transformation chip (32), in which transformed control currents having control current zero components as current control variables ($i_{setpoint\alpha}$, $i_{setpoint\beta}$, $i_{setpoint0}$) are formed from the control currents ($i_{control12}$, $i_{control23}$, $i_{control31}$),

• the Clarke actual current transformer chip (33) and the Clarke control current transformation chip (32) have subordinate difference forming units (34, 35, 36), in which a respective current control difference variable ($i_{rd1}$, $i_{rd2}$, $i_{rd3}$) for a respective current controller (37, 38, 39) connected downstream of the difference forming units (34, 35, 36) is formed,

• the current controllers (37, 38, 39) have a respective further subordinate difference forming unit (40, 41), which is also connected to the Clarke voltage transformation chip (8) and in which difference variables ($u_{d1}$, $u_{d2}$) are formed from the output variables ($u_{a1}$, $u_{a2}$) from the current regulators (37, 38) and the transformed voltages ($u_{\alpha}$, $u_{\beta}$), and

• the output of the control device (29) has a further Clarke back-transformation chip (42) present that forms the control voltages ($u_{control12}$, $u_{control23}$, $u_{control31}$) for the H-bridges in the branches of the converter (1) from the difference variables ($u_{d1}$, $u_{d2}$) and the current-zero-component-related output variable ($u_{a3}$) from the relevant current controller (39).

## Revendications

1. Procédé pour faire fonctionner un onduleur triphasé en montage en triangle raccordé à un réseau d'alimentation électrique triphasé en tension alternative, onduleur qui comporte dans ses trois branches, respectivement un module de phase (1) et respectivement le même nombre de ponts H ayant respectivement un condensateur, dans lequel

• on détermine, avec formation respectivement d'une tension ($\overline{u}_1$, $\overline{u}_2$, $\overline{u}_3$) continue de somme de branches, la somme des tensions continues mesurées aux bornes des condensateurs des ponts H,

• on compare, avec formation et respectivement d'une grandeur ($u_{rd1}$, $u_{rd2}$, $u_{rd3}$) de différence de régulation de tension pour respectivement un régleur (15, 16, 17), chaque tension ($\overline{u}_1$, $\overline{u}_2$, $\overline{u}_3$) continue de somme de branches à une valeur ($\grave{u}_{soll}$) de consigne de tension continue, **caractérisé en ce que**

• on multiplie, avec formation de courants ($i_{a11}$, $i_{a12}$, $i_{a13}$) alternatifs dérivés, des grandeurs ($a_{r1}$, $a_{r2}$, $a_{r3}$) de sortie du régleur (15, 16, 17), respectivement par la tension ($u_{12n}$, $u_{23n}$, $u_{31n}$), alternative associée, normée en ce qui concerne l'amplitude, aux bornes de chaque branche de l'onduleur (1),

• on soumet, avec formation de deux tensions ($u_{\alpha}$, $u_{\beta}$) transformées et deux courants ($i_{\alpha}$, $i_{\beta}$) transformés ayant une composante ($i_0$) continue de courant, les tensions ($u_{12}$, $u_{23}$, $u_{31}$) alternatives aux bornes des branches de l'onduleur (1), et les courants ($i_{a11}$, $i_{a12}$, $i_{a13}$) alternatifs dérivés

respectivement à une transformation de Clark,

• on envoie les tensions ($u_{\alpha}$, $u_{\beta}$) transformées et les courants ($i_{\alpha}$, $i_{\beta}$) transformés à un filtre (26) de puissance active, à la sortie duquel des courants ($i_{\alpha}'$, $i_{\beta}'$) transformés dérivés sont produits,

• on soumet, pour l'obtention de trois courants ($i_{stell12}$, $i_{stell23}$, $i_{stell31}$) de réglage rapportés aux branches, les courants ($i_{\alpha}'$, $i_{\beta}'$) transformés dérivés et les composantes ($i_0'$) continues de courant à une retransformation de Clark et

• à partir des courants ($i_{stell12}$, $i_{stell23}$, $i_{stell23}$) de réglage rapportés aux branches, on forme, au moyen d'un dispositif (29) de commande, des tensions ($u_{stell12}$, $u_{stell23}$, $u_{stell31}$) de réglage des ponts H dans les branches de l'onduleur (1).

2. Procédé suivant la revendication 1, **caractérisé en ce que**

• on amplifie les composantes ($i_0'$) continues de courant.

3. Procédé suivant la revendication 1 ou 2, **caractérisé en ce que**

• on soumet, pour la formation de grandeurs ($i_{soll\alpha}$, $i_{soll\beta}$, $i_{soll0}$) de consigne de courant, les courants ($i_{12}$, $i_{23}$, $i_{31}$) alternatifs passant dans l'onduleur (1) ainsi que les courants ($i_{stell12}$, $i_{stell23}$, $i_{stell31}$) de réglage rapportés aux branches respectivement à une transformation de Clark, pour la formation, d'une part, de courants réels transformés ayant des composantes ($i_{ist\alpha}$, $i_{ist\beta}$, $i_{ist0}$) continues de courant réel, et, d'autre part, de courants de réglage transformés ayant des composantes continues de courant de réglage et on en forme respectivement une grandeur ($i_{rd1}$, $i_{rd2}$, $i_{rd3}$) de différence de réglage de courant pour respectivement un régleur (27, 38, 39) de courant,

• on forme par les grandeurs ($u_{a1}$, $u_{a2}$, $u_{a3}$) de sortie du régleur (37, 38, 39) de courant et par les tensions ($u_{\alpha}$, $u_{\beta}$) transformées, des grandeurs ($u_{d1}$, $i_{d2}$) de différence et

• à partir des grandeurs ($u_{d1}$, $i_{d2}$) de différence et de la grandeur ($u_{a3}$) de sortie rapportée à la composante continue de courant de consigne du régleur (39) de courant correspondant, on forme, par retransformation de Clark, la grandeur ($u_{a3}$) de sortie rapportée aux tensions ($u_{soll12}$, $u_{soll23}$, $u_{soll31}$) de réglage pour les ponts H des branches de l'onduleur (1).

4. Dispositif d'équilibrage d'un onduleur (1) en montage en triangle, qui a, dans les trois branches du montage en triangle, respectivement un module de phase ayant respectivement le même nombre de ponts H ayant respectivement un condensateur et pourvu de respectivement un formateur de sommes pour chaque branche de l'onduleur (1), dans lequel il est formé, à partir des tensions continues mesurées aux bornes des condensateurs des ponts H, respectivement une tension ($\overline{u}_1, \overline{u}_2, \overline{u}_3$) continue de somme de branches,

dans lequel le dispositif d'équilibrage est équipé

• respectivement d'un dispositif (12, 13, 14) de formation d'une différence, dans lequel chaque tension ($\overline{u}_1, \overline{u}_2, \overline{u}_3$) continue de somme de branches est comparée à une valeur ($u_{soll}$) de consigne de tension continue avec formation respectivement d'une grandeur ($u_{rd1}, u_{rd2}, u_{rd3}$) de différence de réglage de tension pour respectivement un régleur (15, 16, 17) monté en aval,
• respectivement d'un multiplicateur (19, 20, 21), dans lequel les grandeurs ($a_{r1}, a_{r2}, a_{r3}$) de sortie du régleur (15, 16, 17) sont multipliées, avec formation de courants ($i_{a11}, i_{a12}, i_{a13}$) alternatifs dérivés, respectivement par la tension ($u_{12n}, u_{23n}, u_{31n}$) alternative associée, normée en ce qui concerne l'amplitude aux bornes de la branche respective de l'onduleur (1),
• d'un module (8) de transformation de tension de Clark pour les tensions ($u_{12}, u_{23}, u_{31}$) alternatives aux bornes des branches de l'onduleur (1) et un autre module (25) de transformation de courant de Clark pour les courants ($ia_{11}, i_{a12}, i_{a13}$) alternatifs dérivés, pour la formation de deux tensions ($u_\alpha, u_\beta$) transformées et de deux courants ($i_\alpha, i_\beta$) transformés ayant une composante ($i_0$) continue de courant,
• d'un filtre (26) de puissance active alimenté par les tensions ($u_\alpha, u_\beta$) transformées et par les courants ($i_\alpha, i_\beta$) transformés pour la production d'autres courants ($i_\alpha', i_\beta'$) transformés,
• d'un module (28) de retransformation de Clark alimenté par les autres courants ($i_\alpha', i_\beta'$) transformés, y compris par la composante ($i_0'$) continue de courant pour l'obtention de trois courants ($i_{stell12}, i_{stell23}, i_{stell31}$) de réglage rapportés à la branche et
• d'un dispositif (29) de commande en aval, dans lequel il est formé, à partir des courants ($i_{stell12}, i_{stell23}, i_{stell31}$) de réglage rapportés à la branche, des tensions de réglage des ponts ($u_{soll12}, u_{soll23}, u_{soll31}$) H des branches de l'onduleur (1).

5. Dispositif d'équilibrage suivant la revendication 4, **caractérisé en ce que**

• il est monté, en aval de l'autre module (28) de transformation de Clark, un amplificateur (27) de la composante ($i_0$) continue de courant.

6. Dispositif d'équilibrage suivant la revendication 4 ou 5, **caractérisé en ce que**

• le dispositif (29) de commande a, du côté de l'entrée, un module (33) de transformateur de courants réels de Clark, dans lequel il est formé, à partir des courants ($i_{12}, i_{23}, i_{31}$) alternatifs passant dans l'onduleur (1), des courants ($i_{stell\alpha}, i_{stell\beta}$) réels transformés ayant une composante ($i_{ist0}$) continue de courant réel et il comporte un module (32) de transformation de courants de réglage de Clark dans lequel, à partir des courants ($i_{stell12}, i_{stell23}, i_{stell31}$) de réglage, des courants de réglage transformés ayant des composantes continues de courant de réglage sont formés sous la forme de grandeurs ($i_{soll\alpha}, i_{soll\beta}, i_{soll0}$) de réglage de courant,
• en aval du module (33) de transformateur de courant réel de Clark et du module (32) de transformation de courants de réglage de Clark, sont montés des formeurs (34, 35, 36) de différence, dans lesquels respectivement une grandeur ($i_{rd1}, i_{rd2}, i_{rd3}$) de différence de réglage de courant est formée pour respectivement un régleur (37, 38, 39) de courant monté en aval des formeurs (34, 35, 36) de différence,
• en aval des régleurs (37, 38, 39) de courant, est monté respectivement un autre formeur (40, 41) de différence, relié aussi au module (8) de transformation de tension de Clark, formeurs de différence dans lesquels il est formé, à partir des grandeurs ($u_{a1}, u_{a2}$) de sortie du régleur (37, 38) de courant et des tensions ($u_\alpha, u_\beta$) transformées, des grandeurs ($u_{d1}, u_{d2}$) de différence et
• il y a, à la sortie du dispositif (29) de commande, un autre module (42) de retransformation de Clark, qui, à partir des grandeurs ($u_{d1}, u_{d2}$) de différence et de la grandeur (( $u_{a3}$) de sortie rapportée à la composante continue de courant du régleur (39) de courant correspondant, forme les tensions ($u_{stell12}, u_{stell23}, u_{stell31}$) de réglage des ponts H des branches de l'onduleur (1).

FIG 1

EP 2 526 604 B1

**FIG 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090102634 A1

**In der Beschreibung aufgeführte Nicht-Patentliteratur**

- **GENG WANG et al.** A Novel Control Algorithm for Cascade Shunt Active Power Filter. *Power Electronics Specialists Conference,* 20. Juni 2004, vol. 1, 771-775

- *IEEE TRANSACTIONS ON INDUSTRIAL ELECTRONICS,* Oktober 2002, vol. 49 (5), 1058-1064